(19)

Europäisches
Patentamt
European
Patent Office
Office européen
des brevets

(11) **EP 4 478 739 A1**

# (12) EUROPEAN PATENT APPLICATION

(43) Date of publication:
**18.12.2024 Bulletin 2024/51**

(21) Application number: **24180984.7**

(22) Date of filing: **10.06.2024**

(51) International Patent Classification (IPC):
$H04R\ 3/00^{(2006.01)}$    $G06F\ 21/55^{(2013.01)}$
$G06F\ 21/83^{(2013.01)}$    $G10L\ 21/0208^{(2013.01)}$
$H04R\ 1/08^{(2006.01)}$

(52) Cooperative Patent Classification (CPC):
**H04R 3/00; G06F 21/554; G06F 21/83;**
G10L 21/0208; H04R 1/08; H04R 2430/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 GB 202308746**

(71) Applicant: **Nokia Technologies Oy
02610 Espoo (FI)**

(72) Inventors:
• **AL-NAIMI, Khaldoon
Beaconsfield (GB)**

• **MONTANARI, Alessandro
Cambridge (GB)**
• **FERLINI, Andrea
Cambridge (GB)**
• **DANG, Ting
Cambridge (GB)**
• **DEMIREL, Berken Utku
Kirsehir (TR)**

(74) Representative: **Nokia EPO representatives
Nokia Technologies Oy
Karakaari 7
02610 Espoo (FI)**

## (54) CANCELLATION OF ULTRASONIC SIGNALS

(57) Example embodiments describe an apparatus, method and computer program relating to cancellation of ultrasonic signals. The apparatus may comprise means for providing first data derived from a signal received by a microphone of a user device and means for providing second data representing mechanical oscillations within a gyroscope of the user device. The apparatus may also comprise means for detecting, based on the first data and the second data, that the signal received by the microphone comprises an ultrasonic signal, means for processing third data to generate fourth data representing an estimate of one or more audible sounds in the first data, wherein the third data is either the second data or is derived from the second data, and means for subtracting the fourth data from the first data to provide fifth data.

EP 4 478 739 A1

## Description

### Field

Example embodiments relate to cancellation of ultrasonic signals. For example, embodiments may relate to an apparatus, method and computer program for cancelling ultrasonic signals which may be intended to cause an unwanted event or output at a user device.

### Background

An apparatus, such as a user device, may comprise one or more microphones for picking-up audio signals which may then be used for various purposes.

For example, a hearing aid may amplify received audio signals for output via a loudspeaker to help a hearing-impaired wearer to better hear external sounds. For example, an earbud may process received audio signals for active noise cancellation (ANC) and/or for pass-through to a loudspeaker in a so-called transparency mode of operation. For example, a digital assistant may respond to certain utterances in received audio signals to perform certain functions, e.g. playing a music track, retrieving information from a remote web service and/or initiating a call or payment to a remote service.

Receipt of ultrasonic signals by one or more microphones of such an apparatus may be problematic.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to one aspect, there is described an apparatus, the apparatus comprising: means for providing first data derived from a signal received by a microphone of a user device; means for providing second data representing mechanical oscillations within a gyroscope of the user device; means for detecting, based on the first data and the second data, that the signal received by the microphone comprises an ultrasonic signal; means for processing third data to generate fourth data representing an estimate of one or more audible sounds in the first data, wherein the third data is either the second data or is derived from the second data; and means for subtracting the fourth data from the first data to provide fifth data.

The processing means may comprise a filter configured to receive the third data and to generate, based at least in part on filter coefficients of the filter, the fourth data.

The filter may be an adaptive filter in which current values of the filter coefficients are modified based, at least in part, on the fifth data to provide updated filter coefficients.

The current values of the filter coefficients may be modified based, at least in part, on multiplying the fifth data with the third data and adding to the current filter coefficients.

The current values of the filter coefficients may be further modified based on an adaptation rate parameter.

In some examples, a first instance of the third data may be associated with a first time window for use in generating a first set of said updated filter coefficients, one or more successive instances of the third data may be associated with successive time windows, for use in generating one or more successive sets of said updated filter coefficients, and wherein the apparatus may be configured to iteratively modify the filter coefficients using the one or more successive instances of the third data until a predetermined condition is reached.

The predetermined condition may be reached when a predetermined mean squared error value is below a predetermined threshold.

The second data may represent two or more sets of gyroscope data representing mechanical oscillations for respective axes of the gyroscope and wherein the apparatus may further comprise means for preprocessing the second data to provide the third data.

The pre-processing means may be configured to select one of the two or more sets of gyroscope data to provide the third data based on said selected set representing the largest value of mechanical oscillations.

The pre-processing means may be configured to provide the third data as a weighted sum of the two or more sets of gyroscope data.

The detecting means may be configured to detect that the signal received by the microphone comprises an ultrasonic signal for a time period T and wherein the subtracting means may be configured to subtract the fourth data from the first data for only part of the time period T.

The subtracting means may be configured to subtract the fourth data from the first data for a plurality of spaced-apart sub-periods within the time period T.

The first data may be provided at the output of one or more non-linear components that process the signal received by the microphone.

The detecting means may be configured to detect that the signal received by the microphone comprises an ultrasonic signal based, at least in part, on identifying non-zero values of the first data and the second or third data for one or more corresponding instances or periods.

The detecting means may be configured to perform amplitude envelope correlation using respective waveforms represented by the first data and the second or third data for generating a first parameter indicative of a similarity between the respective waveforms, and wherein the detection may be based, at least in part, on the first parameter.

The detecting means may be configured to perform spectral analysis of frequency domain representations of respective waveforms represented by the first data and the second or third data for generating a second parameter indicative of similarity between the frequency domain representations, and wherein the detection may be based, at least in part, on the second parameter.

The detection may be based, at least in part, on the first and second parameters meeting respective predetermined conditions.

The detecting means may comprise one or more machine-learned models trained using training data comprising predetermined sets of first and second parameters known to be generated responsive to ultrasonic signals being transmitted to the user device, wherein the detection may be based on an output of the one or more machine-learned models.

According to a second aspect, there is described a method, comprising: providing first data derived from a signal received by a microphone of a user device; providing second data representing mechanical oscillations within a gyroscope of the user device; detecting, based on the first data and the second data, that the signal received by the microphone comprises an ultrasonic signal; processing third data to generate fourth data representing an estimate of one or more audible sounds in the first data, wherein the third data is either the second data or is derived from the second data; and subtracting the fourth data from the first data to provide fifth data.

The processing may comprise using a filter configured to receive the third data and to generate, based at least in part on filter coefficients of the filter, the fourth data.

The filter may be an adaptive filter in which current values of the filter coefficients are modified based, at least in part, on the fifth data to provide updated filter coefficients.

The current values of the filter coefficients may be modified based, at least in part, on multiplying the fifth data with the third data and adding to the current filter coefficients.

The current values of the filter coefficients may be further modified based on an adaptation rate parameter.

In some examples, a first instance of the third data may be associated with a first time window for use in generating a first set of said updated filter coefficients, one or more successive instances of the third data may be associated with successive time windows, for use in generating one or more successive sets of said updated filter coefficients, and wherein the filter coefficients may be iteratively modified using the one or more successive instances of the third data until a predetermined condition is reached.

The predetermined condition may be reached when a predetermined mean squared error value is below a predetermined threshold.

The second data may represent two or more sets of gyroscope data representing mechanical oscillations for respective axes of the gyroscope and wherein the method may further comprise pre-processing the second data to provide the third data.

The pre-processing may select one of the two or more sets of gyroscope data to provide the third data based on said selected set representing the largest value of mechanical oscillations.

The pre-processing may provide the third data as a weighted sum of the two or more sets of gyroscope data.

The detecting may comprise detecting that the signal received by the microphone comprises an ultrasonic signal for a time period T and wherein the subtracting may comprise subtracting the fourth data from the first data for only part of the time period T.

The subtracting may subtract the fourth data from the first data for a plurality of spaced-apart subperiods within the time period T.

The first data may be provided at the output of one or more non-linear components that process the signal received by the microphone.

The detecting may comprise detecting that the signal received by the microphone comprises an ultrasonic signal based, at least in part, on identifying nonzero values of the first data and the second or third data for one or more corresponding instances or periods.

The detecting may comprise performing amplitude envelope correlation using respective waveforms represented by the first data and the second or third data for generating a first parameter indicative of a similarity between the respective waveforms, and wherein the detection may be based, at least in part, on the first parameter.

The detecting may comprise performing spectral analysis of frequency domain representations of respective waveforms represented by the first data and the second or third data for generating a second parameter indicative of similarity between the frequency domain representations, and wherein the detection may be based, at least in part, on the second parameter.

The detection may be based, at least in part, on the first and second parameters meeting respective predetermined conditions.

The detection may use one or more machine-learned models trained using training data comprising predetermined sets of first and second parameters known to be generated responsive to ultrasonic signals being transmitted to the user device, wherein the detection may be based on an output of the one or more machine-learned models.

According to a third aspect, there is described a computer program comprising instructions for causing an apparatus to perform at least the following: providing first data derived from a signal received by a microphone of a user device; providing second data representing mechanical oscillations within a gyroscope of the user device; detecting, based on the first data and the second data, that the signal received by the microphone comprises an ultrasonic signal; processing third data to generate fourth data representing an estimate of one or more audible sounds in the first data, wherein the third data is either the second data or is derived from the second data; and subtracting the fourth data from the first data to provide fifth data.

The third aspect may also comprise any feature of the second aspect.

According to a fourth aspect, this specification describes a computer-readable medium (such as a non-transitory computer-readable medium) comprising program instructions stored thereon for performing at least the following: providing first data derived from a signal received by a microphone of a user device; providing second data representing mechanical oscillations within a gyroscope of the user device; detecting, based on the first data and the second data, that the signal received by the microphone comprises an ultrasonic signal; processing third data to generate fourth data representing an estimate of one or more audible sounds in the first data, wherein the third data is either the second data or is derived from the second data; and subtracting the fourth data from the first data to provide fifth data.

The fourth aspect may also comprise any feature of the second aspect.

According to a fifth aspect, this specification describes an apparatus comprising: at least one processor; and at least one memory including computer program code which, when executed by the at least one processor, causes the apparatus to: provide first data derived from a signal received by a microphone of a user device; provide second data representing mechanical oscillations within a gyroscope of the user device; detect, based on the first data and the second data, that the signal received by the microphone comprises an ultrasonic signal; process third data to generate fourth data representing an estimate of one or more audible sounds in the first data, wherein the third data is either the second data or is derived from the second data; and subtract the fourth data from the first data to provide fifth data.

The fifth aspect may also comprise any feature of the second aspect.

## Drawings

FIG. 1 is a perspective view of a first example user device, being a digital assistant, which may be used in example embodiments;
FIG. 2 is a perspective view of a second example user device, being a set of earphones, which may be used in example embodiments;
FIG. 3 is a schematic diagram of components of a left-hand earphone of the set of earphones shown in FIG. 2, which may be useful for understanding example embodiments;

FIG. 4 is a schematic diagram of components of an apparatus according to one or more example embodiments;
FIG. 5 is a schematic diagram of an example gyroscope, which may be used as one of the FIG. 4 components;
FIG. 6 is a graph showing waveforms representing gyro data from a gyroscope which may be indicative of an ultrasonic attack;
FIG. 7 is a flow diagram showing operations that may be performed according to one or more example embodiments;
FIG. 8 is a schematic diagram of components of another apparatus according to one o rmore example embodiments;
FIG. 9 is a block diagram showing an example method, by use of a controller component, for detecting an ultrasonic attack according to one or more example embodiments;
FIG. 10 is a block diagram showing another example method, by use of a controller component, for detecting an ultrasonic attack according to one or more example embodiments;
FIG. 11 is a block diagram showing another example method, by use of a controller component, for detecting an ultrasonic attack according to one or more example embodiments;
Fig. 12 is a schematic block diagram of an apparatus according to one or more example embodiments; and
Fig. 13 is a non-transitory medium for storing computer-readable instructions which, when executed or processed by one or more processors of an apparatus, may perform operations according to one or more example embodiments.

## Detailed Description

Example embodiments relate to cancellation of ultrasonic signals.

For example, example embodiments may relate to an apparatus, method and computer program for cancellation of ultrasonic signals which may be intended to cause an unwanted event or unwanted output by a user device. This may be referred to as an "ultrasonic attack."

The apparatus may itself comprise the user device and the method operations described herein may be performed by the user device. However, in some cases, the apparatus may be a different entity than the user device, e.g. a smartphone, tablet computer or other computer system in communication with the user device, which apparatus performs said method operations described herein.

A user device may be any apparatus that comprises one or more microphones and may be used, e.g. interacted with and/or carried, by one or more users. Examples may include smartphones, tablet computers, wearable computers, digital assistants, hearing aids and one (or a pair) of earphones. The term earphones also covers earbuds and headphones.

It will be known that some earphones comprise at least one microphone that may be used as part of an active noise cancellation (ANC) system. Sometimes, earphones comprise two or more microphones, e.g. one external and one internal, for providing advanced methods of ANC. Sometimes, earphones may operate in a so-called transparency mode in which at least some external sounds received by the microphone are passed-through to a loudspeaker of the earphone so that the user can hear part of their environment.

An ultrasonic attack may involve some external entity transmitting unwanted content encoded or modulated onto an ultrasonic carrier signal (above 20 kHz).

The unwanted content may be for malicious purposes, for example to disturb a user, play unsolicited advertisements, control some aspect of a voice-responsive system, e.g. a smart speaker or digital assistant and/or to initiate communications with one or more external systems. For example, the unwanted content may comprise speech containing one or more commands that will cause a digital assistant to effect a digital payment.

Due to non-linearities inherent in one or more components of user devices, the ultrasonic signal received by a microphone of the user device may get downshifted in the frequency domain to the audio range (usually between 20 Hz and 20 kHz). Here, a "derived signal" that results from the non-linearities may be handled or otherwise processed as if an audio signal. For example, the derived signal may be handled or processed by one or more audio-handling functional components, e.g. amplifiers, ANC processors, digital assistant processors, e.g. a speech processing function, a system-on-chip providing such functions, and so on.

Non-linearities are often present in pre-amplifiers and/or analog-to-digital convertors (ADCs) located between the microphone and audio-handling functional components.

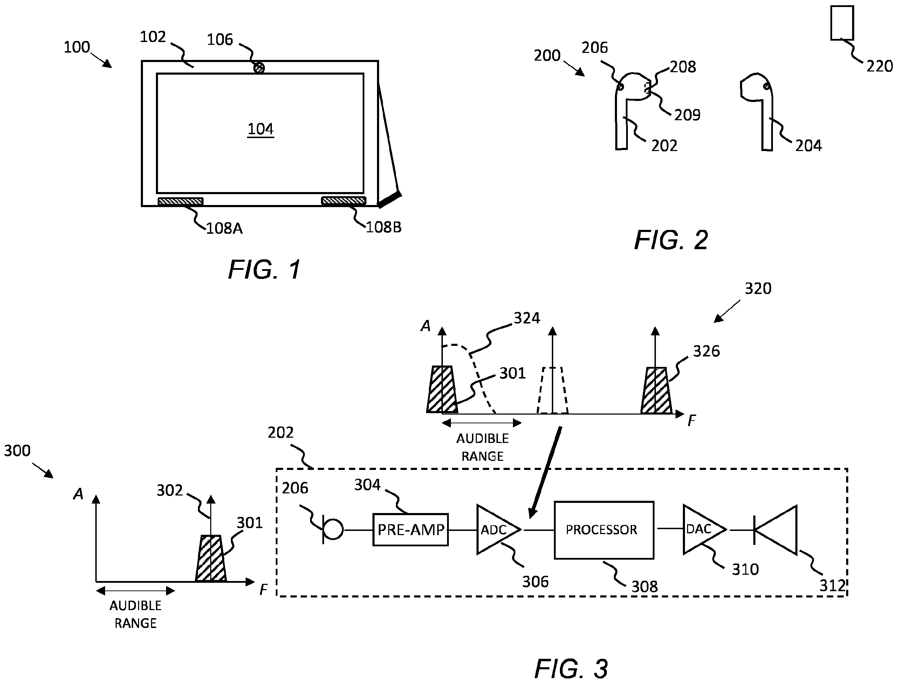

FIG. 1 shows an example user device in the form of a digital assistant 100.

The digital assistant 100 may comprise a body 102, a display screen 104 (which may or may not be touch sensitive), a microphone 106 and first and second loudspeakers 108A, 108B. The digital assistant 100 may comprise processing circuitry or functionality for receiving and processing signals received by the microphone 106.

For example, the digital assistant 100 may comprise processing functionality, e.g. a speech processing function, for detecting one or more spoken utterances in an audio signal. The one or more spoken utterances may be processed to perform one or more actions. Some actions may be offline actions, not requiring communication with one or more remote devices over a network. An example of an offline action may be informing a user of the current date and/or time based on a spoken request. Some actions may be online actions, requiring communication with one or more remote devices over a network in order to receive the required data. For example, a spoken utterance may request images, video or music from a remote device or server for playback by the digital assistant 100. Image and video data may be output using the display screen 104 and audio data may be output using the first and second loudspeakers 108A, 108B.

The digital assistant 100 may comprise one or more communication modules for processing online actions. Example communication modules may operate according to radio access network (RAN) standards, such as 3G, 4G, 5G or future generation standards. Alternatively, or additionally, there may be a communication module for WiFi communication or similar. Alternatively, or additionally, there may be a communication module for short-range communication using, for example, Bluetooth or Zigbee.

FIG. 2 shows another example user device in the form of a pair of earphones 200.

The pair of earphones 200 comprises a left and right -hand earphone 202, 204. The left-hand earphone 202 may comprise one or more external microphones 206 on a first side and a loudspeaker 208 located partly within a channel 209 on a second side. An internal microphone (not shown) may also be provided within the channel 209 for enhanced ANC processing in some cases.

Identical components may be provided on the right-hand earphone 204, although not necessarily.

At least one of the pair of earphones 200, in this case the left-hand earphone 202, may comprise processing circuitry for receiving and processing signals received by the external microphone 206. For example, the left-hand earphone 202 may comprise processing functionality for handling or processing data derived from the received signals, for example by performing ANC, in which a cancellation signal may be output to the loudspeaker 208, or by providing a filtered or amplified version of the received signals to the loudspeaker.

The processing functionality may be performed locally, for example by one or more controllers on the left-hand earphone 202 and/or at least some processing functionality may be performed by an external apparatus, e.g. a smartphone 220. The smartphone 220 may be in communication with the pair of earphones 200 using any of the above communication modules and standards.

FIG. 3 is a schematic diagram of functional components of the left-hand earphone 202 which may be useful for understanding example embodiments. The same components and operations may be provided and performed by the right-hand earphone 204.

Components of the left-hand earphone 202 are shown in a dashed box. The left-hand earphone 202 may comprise the external microphone 206, a pre-amplifier 304, an ADC 306, a processor 308, a digital-to-analog convertor (DAC) 310 and the loudspeaker 312. The processor 308 may comprise the above-mentioned processing circuitry or provide such functionality.

Reference numeral 300 shows a frequency domain representation of an ultrasonic signal transmitted to the left-hand earphone 202. The ultrasonic signal is represented by a band 301 centred on a frequency 302 outside of the audible range (above 20 kHz). The ultrasonic signal will not be heard by a user of the pair of earphones 200 and serves no intended purpose to the user; it may be a form of ultrasonic attack mentioned above. As shown at the output of the ADC 306, non-linearities inherent in one or more of the pre-amplifier 304 and the ADC may cause down-shifting of components of the band 301 to be within the audible range, below 20 kHz. If within a low-pass filter response 324 prior to the processor 308, this derived version of the ultrasonic signal may be treated by the processor 308 as a legitimate audio input. This audio input may be used for performance of ANC, filtering and/or amplification to the loudspeaker 312.

In the case of the FIG. 1 digital assistant 100, the same issues may apply whereby an ultrasonic attack may be downshifted due to non-linearities inherent in one or more components of the digital assistant to be within the audible range, below 20 kHZ. Processing functionality of the digital assistant 100 configured to receive and process signals within the audible range, e.g. spoken utterances and actions based on those spoken utterances, may therefore handle signals or data derived from the ultrasonic attack to perform certain offline and/or online actions referred to above.

Example embodiments aim to prevent or at least mitigate events associated with receipt of ultrasonic signals by one or more microphones, such as the microphone 106 of the digital assistant 100 in FIG. 1 or the external microphone 206 of the left-hand earphone 202 in FIG. 2.

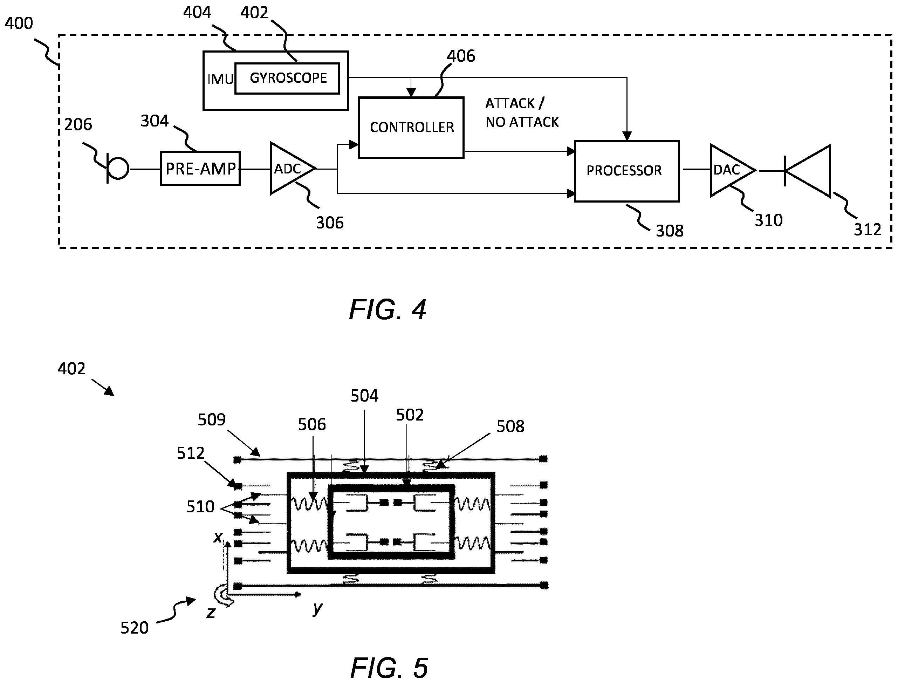

FIG. 4 is a schematic diagram of an apparatus 400 according to some example embodiments.

The apparatus 400 may be similar to that of the left-hand earphone 202 shown in FIG. 3 in that it comprises a microphone 206, a pre-amplifier 304, an ADC 306, a processor 308, a DAC 310 and a loudspeaker 312.

Although not shown, one or more other processing functions may be provided at the output of the processor 308 in addition to, or alternative to, the DAC 310 and loudspeaker 312. For example, a speech processing function may be provided to perform offline or online actions responsive to detecting one or more spoken utterances.

The apparatus 400 may further comprise a gyroscope 402, which may be provided as part of an inertial measurement unit (IMU) 404 of the apparatus. As will be known, many user devices, including smartphones and tablet computers, comprise IMUs for measuring parameters such as force, angular rate and orientation of the smartphone. Other components that may be found in an IMU include an accelerometer and a magnetometer.

The gyroscope 402 may generate gyro data representing mechanical oscillations within the or each gyroscope, which mechanical oscillations, it has been found, may at least in part represent sensing of ultrasonic signals in the environment.

A controller 406 may be configured to receive first data derived from a signal received by the microphone 206, e.g. subsequent to handling or processing by the pre-amplifier 204 and ADC 306 and/or any other components that introduce non-linearities. The controller 406 may also be configured to receive second data, being gyro data, representing mechanical oscillations within the gyroscope 402. The controller 406 may be configured to detect, based at least in part on the first data and the second data, which may correspond to a common time instance or time period, whether the signal received by the microphone 206 comprises an ultrasonic signal. If so, then the signal is considered to represent an ultrasonic attack and appropriate mitigating action(s) may be performed by the processor 308.

The controller 406 may, for example, output a control signal indicative of an attack/no attack detection, to the processor 308 which takes appropriate mitigating action(s) responsive to an attack detection.

In some example embodiments, the mitigation action may comprise a cancellation action to subtract at least some, if not all, of data corresponding to an ultrasonic attack from the first data.

In some example embodiments, the second data may be provided from the gyroscope 402 to the processor 308.

Alternatively, third data derived from the second data may be provided to the processor 308. For example, the third data may comprise a subset or weighted sum of individual subsets of second data representing mechanical oscillations of the gyroscope for respective axes thereof. An optional pre-processor module (not shown) may be provided as part of the apparatus 400 for this purpose.

In some embodiments, the controller 406 may comprise part of the processor 308 or may be a separate entity, which comprises one or more controllers and/or one or more processors or equivalents thereof.

The gyroscope 402 may be a MEMS gyroscope.

FIG. 5 is a schematic view of the gyroscope 402, which comprises a resonating mass 502, a sensing frame 504, a plurality of driving springs 506 between the resonating mass and sensing frame, and a plurality of sensing springs 508 connected to outer lines 509. Connected to the sensing frame 504 are a plurality of Coriolis sensing fingers 510 interposed between terminals 512. MEMs gyroscopes may have different forms and the FIG. 5 schematic is an example.

In general, gyroscopes are devices that can measure the angle of orientation or the angular rate of rotation of a body. The principle relies on the resonating mass 502 suspended in such a way that Coriolis forces can be sensed as the resonating mass undergoes rotation relative to an inertial space.

As such, a gyroscope, such as the gyroscope 402 shown in FIG. 5, usually comprises movable parts in at least two orthogonal directions to generate Coriolis force.

In a driving direction, axis y in this case, the driving springs 506 use a sinusoidal voltage to cause the resonating mass 502 to oscillate at its natural frequency. The Coriolis sensing fingers 510 move owing to transverse Coriolis force / motion. In a sensing direction, axis x in this case, acceleration leads to a change in capacitance which can be sensed at the terminals 512. This acceleration is similar to angular rate of rotation of the resonating mass 502. The structure of gyroscopes is typically a single-degree-of-freedom system with a high damping ratio $\xi$. Damping can be ignored a low frequencies and gyroscopes may produce linear results. As frequencies increase, damping becomes dominant and oscillations occur with the characteristics of forced vibration. Because sound waves are pressure waves, it is found that gyroscopes respond to higher-frequency (ultrasonic) signals and not to audio signals; the result is that gyroscopes such as the gyroscope 402 shown in FIG. 5 may be used to detect ultrasonic signals using gyro data.

Reference numeral 520 indicates three axes (*x, y, z*) for which gyro data can be generated in this case. The *y* axis is a driving direction, the x axis a sensing direction and the z axis a rate input.

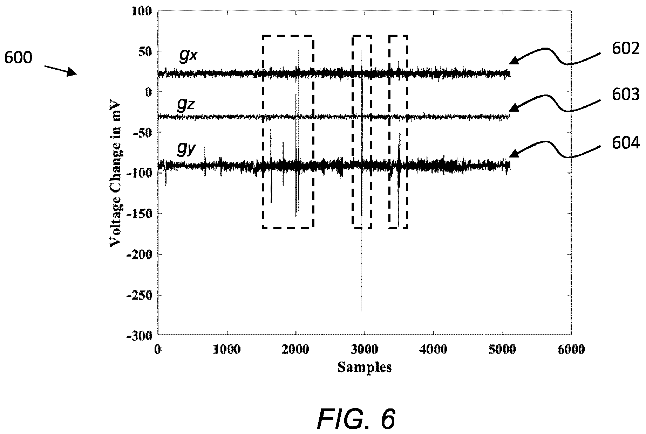

FIG. 6 is a graph 600 showing three waveforms 602, 603, 604 (indicated *gx, gz, gy*) representing gyro, or second data as described herein, for the above three axes (x, z, y) which may result from exposure of the gyroscope 402 to ultrasonic signals in the environment. It is assumed that the body to which the gyroscope 402 (or IMU 404) is mounted, e.g. the apparatus 400, is static. One or more of the three waveforms 602, 603, 604 can be sampled over time to generate the gyro, or second data.

As will be seen, the three waveforms 602, 603, 604 represent sensed mechanical oscillations in all three axes (*x, z, y*) and that most oscillations, or spikes, are present in the third waveform 604 associated with the *y* axis, or the driving direction. Which of the three waveforms 602, 603, 604 indicates most oscillations depends on a number of factors, including the orientation of the gyroscope 402 on the apparatus 400 and/or the relative direction of the ultrasonic signals arriving at the gyroscope. For this reason, the gyro data, or second data, that is provided to the controller 406 may comprise only one, two or all three sampled waveforms 602, 603, 604, with two or three waveforms (if used) possibly averaged or a weighted sum used.

For example, in some embodiments, each of the three waveforms 602, 603, 604 may be monitored to determine which waveform has the most oscillations over a predetermined time frame; it may be this waveform that is sampled and provided to the controller 406 as the gyro, or second data.

Alternatively, a weighted sum of the three waveforms 602, 603, 604 may be provided to the controller as the gyro, or second data.

Returning to FIG. 4, the controller 406 may receive as input first data at the output of the ADC 306 (derived from a signal, if any, received by the microphone 206) and second data from the gyroscope 402. The controller 406 is configured to determine based on the first and second data for the same time instance or time period whether a signal received by the microphone comprises an ultrasonic signal (an attack) or not. Various way as to how this can be performed will be described later on.

In the event that the controller 406 determines that a signal received by the microphone 206 comprises an ultrasonic signal (an attack), an "attack" or "enable" signal may be sent to the processor 308.

The processor 308 may responsively perform one or more mitigation actions, e.g. a cancellation action to subtract at least some, if not all, of data corresponding to an ultrasonic attack from the first data.

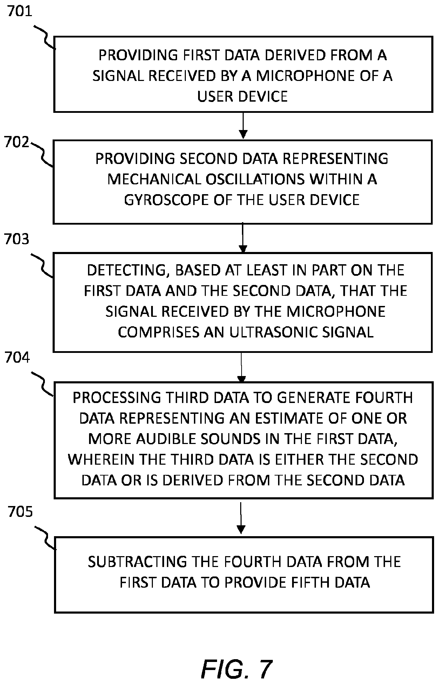

FIG. 7 is a flow diagram indicating processing operations that may be performed by an apparatus according to one or more example embodiments.

The processing operations may be performed by hardware, software, firmware or a combination thereof. The shown order is not necessarily indicative of the order of processing. The apparatus may comprise, or at least include, one or more means for performing the operations, wherein the means may comprise one or more processors or controllers which, when executing computer-readable instructions, may cause said operations to be performed.

A first operation 701 may comprise providing first data derived from a signal received by a microphone of a user device.

A second operation 702 may comprise providing second data representing mechanical oscillations within a gyroscope of the user device.

A third operation 703 may comprise detecting, based on the first data and the second data, that the signal received by the microphone comprises an ultrasonic signal.

A fourth operation 704 may comprise processing third data to generate fourth data representing an estimate of one or more audible sounds in the first data, wherein the third data is either the second data or is derived from the second data.

A fifth operation 705 may comprise subtracting the fourth data from the first data to provide fifth data

The term providing may mean receiving, generating and/or storing.

The third operation 703 may use first and second data corresponding to the same time instance or time period.

The fourth and fifth operations 704, 705 may be performed responsive to the third step of detecting that the signal received by the microphone comprises an ultrasonic signal.

The second data of the second operation 702 may comprise one set of second data representing mechanical oscillations for a single axis or may comprise a weighted sum of two or more sets of second data representing multiple oscillations for two or more axes of the gyroscope.

The fifth data may therefore represent a noise-cancelled version of the first data in which at least some audible sounds, e.g. speech, are removed prior to output via, e.g. a loudspeaker, and/or prior to input to another processing function which may comprise a speech processing function.

In this case, the speech processing function is therefore less likely to interpret the fifth data as comprising unwanted speech, e.g. commands, and therefore may avoid consequences of an ultrasonic attack.

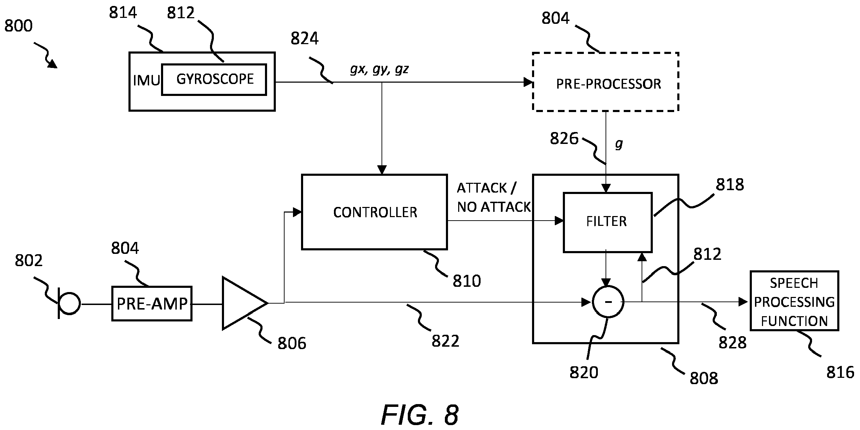

FIG. 8 is a schematic diagram of another apparatus 800 according to some example embodiments.

The apparatus 800 is similar to the apparatus 400 shown in, and described with reference to, FIG. 4.

The apparatus 800 may comprise a microphone 802, a pre-amplifier 804, an ADC 806, a processor 808, a controller 810 and a gyroscope 812. The gyroscope 812 may be provided as part of an IMU 814 of the apparatus 800.

As for the FIG. 4 example, the microphone 802 may pick-up signals which pass through the pre-amplifier 804 and ADC 806. At the output of the ADC 807 on a signal line 822 may be provided first data which may represent unwanted sounds, e.g. malicious speech due to downshifting as mentioned above. The gyroscope 812 may generate gyro data, or second data, representing mechanical oscillations within the or each gyroscope. The second data is provided on a signal line 824 and may represent mechanical oscillations for only one axis, e.g. the y axis, or may comprise two or more sets (e.g. three sets) of gyroscope data representing mechanical oscillations for two or more axes, e.g. *the x, z, y* axes.

The first and second data may be input to the controller 810 which may be configured to detect, based at least in part on the first data and the second data, e.g. for the same time instance or time window, whether the signal received by the microphone 806 comprises an ultrasonic signal.

If so, the controller 810 may, for example, output a control signal indicative of an attack/no attack detection, to the processor 808.

According to some example embodiments, responsive to the control signal indicating an attack detection, the processor 808 may be configured to perform a cancellation action to subtract at least some, if not all, of data corresponding to an ultrasonic attack from the first data.

According to some example embodiments, the processor 808 may comprise a filter 818 and subtracting element 820, any of which may be implemented in hardware, software, firmware or a combination thereof. Equivalent circuitry may be provided as an alternative which performs the same or substantially the same functions.

The processor 808 may receive, via the signal line 824, third data, labelled *g*, which may comprise the second data or, optionally, the apparatus 800 may further comprise a pre-processor 804 between the gyroscope 812 and processor for providing the third data. In the case that the second data comprises two or more sets of gyroscope data, e.g. *gx, gy, gz* representing mechanical oscillations for three axes, the pre-processor 804 may be configured to provide the third data for input to the processor 808 using signal line 826. The pre-processor 804 may, for example, select one of the three sets of second data as the third data. The selected set may comprise that which represents the largest value of mechanical oscillations, e.g. the *gy* data in the case of the FIG. 6 waveforms. Alternatively, the pre-processor 804 may produce a weighted sum of the two or more sets of second data to provide the third data, e.g. as:

$$g = a.g_x + b.g_y + c.g_z \qquad (1)$$

where *a*, *b* and *c* are the weights.

The third data is in this sense derived from the second data.

The filter 818 may be configured to process the third data to generate fourth data representing an estimate of one or more audible sounds in the first data. For example, the one or more audible sounds may represent speech, e.g. one or more malicious utterances in the ultrasonic signals and which may therefore be represented in the first data.

The filter 818 may comprise an adaptive filter, e.g. a Finite Impulse Response (FIR) filter, configured to generate the fourth data, e.g. as:

$$\hat{y} = \sum_{i=0}^{N} g_{n-i}.a_i \qquad (2)$$

where $\hat{y}$ is the fourth data, representing one or more audible sounds, $g_{n-i}$ refers to a current instance or window of third data, e.g. samples of the geo data, including a current sample and a predetermined set of prior samples, $a_i$ refers to filter coefficients and *N* refers to a filter length. The length of the current instance or window of third data may comprise a number of samples that is the same as the adaptive filter length *N*.

The fourth data $\hat{y}$ may be provided to the subtracting element 820.

The subtracting element 820 may be configured to subtract the fourth data $\hat{y}$ from the first data received on signal line 822, e.g. for the same time instance or time window to generate fifth data. This may be denoted as:

$$err = y - \hat{y} \qquad (3)$$

where *err* is the fifth data, which may be referred to as an error signal or error data, *y* refers to the first data, e.g.

speech data derived from the microphone signal, and $\hat{y}$ refers the fourth data.

The fifth data therefore represents a modified version of the first data in which at least some of the first data is subtracted or cancelled. The fifth data may be provided on a signal line 828 to a speech processing function 816.

The speech processing function 816 may be configured to receive the fifth data, and to detect and process one or more utterances, e.g. digital assistant commands, in a conventional manner.

The speech processing function 816 is therefore less likely to recognise and therefore process malicious utterances in the first data because it receives and processes the fifth data.

In some example embodiments, the filter 818 may comprise an adaptive filter in which current values of the filter coefficients $a_i$ may be modified based, at least in part, on the current set of fifth data to provide updated filter coefficients.

As will be seen in FIG. 7, the current set fifth data may be fed-back via a signal line 812 to the filter 818 for modifying the current values of the filter coefficients $a_i$.

For example, current values of the filter coefficients $a_i$ may be modified based, at least in part, on multiplying the fifth data with the third data, representing the current window of third data, and adding to the current values of the filter coefficients.

For example, the current values of the filter coefficients may be modified based also on an adaptation rate parameter $\mu$ which may be a default of user-determined value usually in the order of 0.01 to 0.1 or thereabouts.

For example, the processor 808 may be configured to modify the current values of the filter coefficients as:

$$\vec{a}_n = \vec{a}_{n-1} + \mu.err.\vec{g}_n \qquad (4)$$

where $\overrightarrow{a_n}$ are the updated values of the filter coefficients, $\overrightarrow{a_{n-1}}$ are the current values of the filter coefficients, $\mu$ is an adaptation rate parameter, err is the fifth data and $\overrightarrow{g_n}$ is the current window of third data.

The values of $\overrightarrow{a_n}$ and $\overrightarrow{g_n}$ may be defined as vectors (5) and (6), respectively:

$$\vec{a}_n = \begin{bmatrix} a_0 \\ a_1 \\ a_2 \\ \vdots \\ a_N \end{bmatrix} \qquad (5)$$

$$\vec{g}_n = \begin{bmatrix} g_n \\ g_{n-1} \\ g_{n-2} \\ \vdots \\ g_{n-N} \end{bmatrix} \qquad (6)$$

A first instance of the third data (comprising a current sample of the third data and one or more previous samples of the third data) is therefore associated with a first time window for use in generating a first set of said updated filter coefficients.

One or more successive instances of the third data may therefore be associated with one or more successive time windows (e.g. in which the window is iteratively shifted along by one or a predetermined number of sample)s for use in generating one or more successive sets of updated filter coefficients.

In this way, the filter 818 may iteratively update its filter coefficients as successive instances of the third data is or are received in order that an optimum set of filter coefficients is reached in a converging manner.

For example, the filter coefficients may be continuously updated until a predetermined condition is reached. For example, the filter coefficients may be iteratively updated and a corresponding mean squared error value iteratively computed. Updating of the filter coefficients may for example stop when the mean squared error value is below a predetermined threshold.

At this time, the filter 818 may be capable of cancelling most, if not all, of the unwanted sounds in the first data using the fifth data.

The speech processing function 816, upon receiving the fifth data on signal line 828, should not therefore recognise and process one or more unwanted utterances that may be present in the first data.

Even prior to this predetermined condition, as the filter coefficients are being updated, the speech processing function 816 is less likely to recognise and process one or more unwanted utterances.

In some example embodiments, the subtracting element 820 may be configured to subtract the fourth data $\hat{y}$ from the first data for substantially a time period $T$ in which an ultrasonic attack is detected and signalled to the processor 808 by the controller 810. The time period $T$ may correspond to one or more words of speech.

In some example embodiments, the subtracting element 820 may be configured to subtract the fourth data $\hat{y}$ from the first data for only part of the time period $T$ in which an ultrasonic attack is detected and signalled to the processor 808 by the controller 810. This may account for the fact that even cancellation of part of an unwanted utterance may be sufficient to prevent it being recognised and processed by the speech processing function 816. In some example embodiments, the subtracting element 820 may be configured to subtract the fourth data $\hat{y}$ from the first data for a plurality of spaced-apart periods of time within the time period $T$. By reducing the number of subtractions by the subtracting element 820, processing resources are used more efficiently.

Example embodiments therefore provide an apparatus, method and computer program for mitigating ultrasonic attacks. Example embodiments avoid disruption to the user of an apparatus, which might otherwise involve, for example, disabling a microphone or some other part of the apparatus in response to an ultrasonic attack. The user may not even be aware of the cancellation action as it is performed.

Detection of Ultrasonic Signal

A number of methods of detection of an ultrasonic signal, e.g. by the controller 406, 810 shown in FIGs. 4 and 7, will now be described by way of non-limiting example.

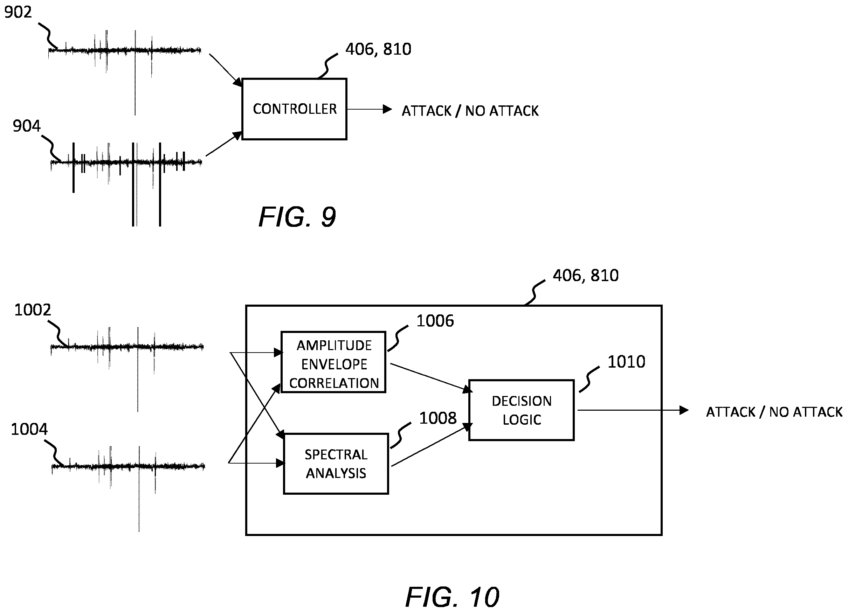

Referring to FIG. 9, the controller 406, 810 may for example detect that the signal received by the microphone 206, 802 is an ultrasonic signal if the first data (indicated by first waveform 902) and the second, gyro, data (represented by second waveform 904) represent non-zero values for one or more corresponding time instances or time periods.

Here, the first and second waveforms 902, 904 for a same time period are slightly different but clearly represent non-zero values over a majority of the time period. This indicates that, by the first data, some signal has been received by the microphone 206, 802 and, by the second, gyro, data that mechanical oscillations within the gyroscope 402, 812 have been detected in the same time period. This may be indicative of ultrasonic signals in the environment. On this basis, it may be determined that the signal received by the microphone 206, 802 is an ultrasonic signal and represents a form of potential ultrasonic attack.

This relatively simple detection example may be appropriate where the apparatus 400, 800 is static and not usually in motion. For example, the digital assistant 100 in FIG. 1 is ordinarily static and sits on a table or work surface.

For cases where the apparatus 400, 800 may be in motion, such as for smartphones, tablet computers, hearing aids and earphones, such as the set of earphones 200 shown in FIG. 2, it is required to distinguish gyro data that may also indicate motion of the apparatus when carried by a user. The same operations may however be applied to a static apparatus, such as the digital assistant shown in FIG. 1

In such cases, it may be appropriate to use one or more different detection methods to better discriminate gryo data representing ultrasonic signals from those due to normal motion the apparatus when carried by a user. The use of two or more different detection methods may give more accurate results.

Referring to FIG. 10, the controller 406, 810 may similarly receive first data (represented by waveform 1002) and second, gyro, data (represented by waveform 1004) and may identify similarity or similarities between the first and second data.

For example, the controller 406, 810 may comprise an amplitude envelope correlation (AEC) module 1006. As the name suggests, the AEC module 1006 may perform correlation (e.g. cross-correlation) using the first data and the second data, effectively determining a similarity between time-domain envelopes of the waveforms 1002, 1004 represented by the first data and the second data, to generate a first parameter. The first parameter may be an indication of similarity, e.g. in terms of a ratio or percentage. For example, a value closer to 1 (ratio) or 100% (percentage) may indicate a high similarity and a value closer to zero (ratio) or 0 % may indicate a low similarity.

For example, the controller 406, 810 may additionally, or alternatively, comprise a spectral analysis module 1008. The spectral analysis module 1008 may perform spectral analysis of frequency domain representations of, in effect, the waveforms 1002, 1004 represented by the first data and the second data. The spectral analysis module 1008 may generate a second parameter indicative of similarity between the frequency domain representations, e.g. in terms of energy levels at baseband and/or one or more harmonics. Similar to the AEC module 1006, the second parameter may be an indication of similarity, e.g. in terms of a ratio or percentage. For example, a value closer to 1 (ratio) or 100% (percentage) may indicate a high similarity and a value closer to zero (ratio) or 0 % may indicate a low similarity.

One or both of the AEC module 1006 and spectral analysis module 1008 may be employed.

The first and/or second parameters respectively generated by the AEC module 1006 and/or spectral analysis module 1008 may be provided to a decision logic module 1010 configured to determine, based on the value(s) of said parameter(s), whether a signal received by the microphone 206, 802 is an ultrasonic signal and may therefore represent a form of ultrasonic attack.

For example, the decision logic module 1010 may implement one or more rules. The one or more rules may be based on predetermined threshold values for the first and/or second parameters.

For example, the decision logic module 1010 may determine that if the first and/or second parameter is above 0.65 or 65%, then the signal received by the microphone 206, 802 is an ultrasonic signal. For example, the decision logic module 1010 may determine that both the first and second parameters need to be above 0.65 or 65% for such a determination. In other examples, the ratios or percentages may be different for the first and second parameters, e.g. 0.75 or 75% for the first parameter and 0.6 or 60% for the second parameter. These values are examples and can be varied as appropriate.

For example, the decision logic module 1010 may alternatively comprise one or more machine-learned (ML) models. Any suitable form of ML model may be used, e.g. a generative adversarial network (GAN) or similar. Known deep-learning methods for training and subsequent inference may be used. Embodiments are not limited to any particular form of model or neural network.

The one or more ML models may be trained using training data comprising predetermined sets of first and/or second parameters known to be generated responsive to ultrasonic signals being transmitted to the apparatus 400, 800 or one or more different test apparatuses. During an inference stage, the one or more ML models may receive as input the first and/or second parameters from the respective AEC module 1006 and/or spectral analysis module 1008. Based on how the one or more ML models have been trained, an output of the one or more ML models may be a detection classification (ultrasonic signal/attack or no attack).

In another example embodiment, consider an adapted version of the FIG. 4 apparatus 400 in which a second microphone is provided and which is connected to the processor 308 in the same way, i.e. via one or more non-linear components.

The apparatus 400 may, for example, comprise the left-hand earphone 202 shown in FIG. 2.

In addition to the one or more external microphones 206, an internal microphone may be provided within the channel 209 housing the loudspeaker 208. This may be useful for enhanced ANC system processing and/or for transparency mode operation by the processor 308.

In this case, another form of analysis may additionally involve comparing respective energy levels of signals derived from said external and internal microphones for the same time period. A signal derived from an audio signal received at the internal microphone will inevitably have less energy than that at the external microphone due to passive attenuation by the body of the left-hand earphone 202.

This attenuation, or the ratio of the respective energy levels, will generally be known or is measurable. A figure of 20 dB is a realistic example for audio signals.

Where the external and internal microphones receive ultrasonic signals, the attenuation, or the ratio of the respective energy levels, will be much higher because high frequency signals are attenuated to a higher degree by objects such as the body of the left-hand earphone 202.

It follows that an above-threshold attenuation, or ratio of the respective energy levels, can be used (alone or in combination with one or more other methods above) to determine if signals received by at least the external microphone 206 comprise ultrasonic signals.

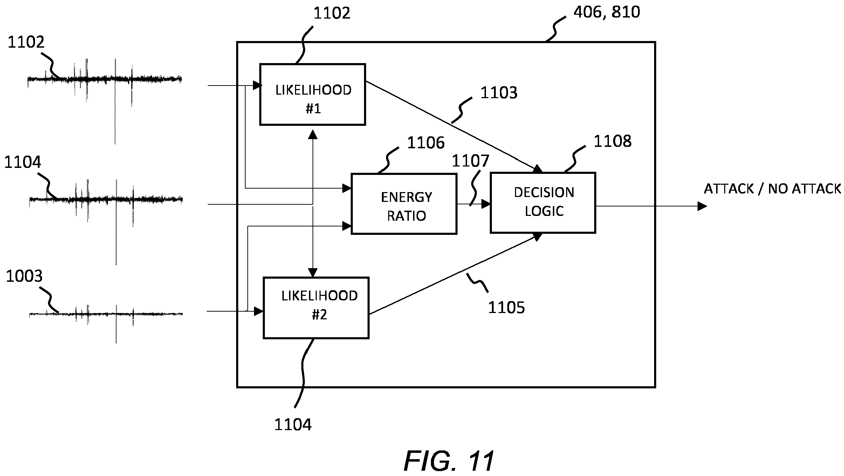

Referring to FIG. 11, the controller 406, 810 in another example embodiment may provide first data (represented by waveform 1102) derived from a signal received by the external microphone 206. The controller 406, 810 may also receive second, gyro, data (represented by waveform 1104) from the gyroscope 402, 812 for the same time period. The controller 406, 810 may also receive third data (represented by attenuated waveform 1103) derived from the same signal received by an internal microphone for the same time period.

A first likelihood module 1102 may receive the first and second, gyro, data. The first likelihood module 1102 may comprise one or both of the ACL module 1006 and the spectral analysis module 1008 for generating the first and/or second parameters as explained above with reference to FIG. 10, for example as ratios or percentages or an average of ratios or percentages if both first and second parameters are used.

The first likelihood module 1102 may output a first likelihood value 1103 based on the first and/or second parameters to a decision logic module 1108.

A second likelihood module 1104 may optionally be provided. The second likelihood module 1104 may receive the second, gyro, data and the third data. The second likelihood module 1104 may be configured the same as the first likelihood module 1102 but obviously acts on the third data which represents an attenuated version of the first data.

The second likelihood module 1104 may output a second likelihood value 1105 based on the first and/or second parameters to the decision logic module 1108.

An energy ratio module 1106 may receive the first data and the third data and may determine a third parameter 1107 indicative of an energy ratio between waveforms represented by the first and third data. This may be performed by comparison at respective time instances over the time period.

The energy ratio module 1106 may output the third parameter 1107 to the decision logic module 1108.

The decision logic module 1108 may implement one or more rules. The one or more rules may be based on predetermined threshold values for the first likelihood value 1103, the second likelihood value 1105 (if used) and the third parameter 1107.

For example, the decision logic module 1108 may determine that if the first likelihood value 1103 is above 0.65 or 65% and the third parameter 1107 is a ratio above a threshold ratio, e.g. equivalent to 30 dB, then the signal received by the microphone 206 is an ultrasonic signal. For example, the decision logic module 1108 may determine that, in addition to the third parameter 1107 condition, both the first and second likelihood values need to be above 0.65 or 65% for such a determination. These values are examples and can be varied as appropriate.

For example, the decision logic module 1108 may alternatively comprise one or more machine-learned (ML) models. Any suitable form of ML model may be used, e.g. a generative adversarial network (GAN) or similar. Known deep-learning methods for training and subsequent inference may be used. Embodiments are not limited to any particular form of model or neural network.

The one or more ML models may be trained using training data comprising predetermined sets of first and/or second likelihood values and third parameters known to be generated responsive to ultrasonic signals being transmitted to the apparatus 400, 800 or one or more different test apparatuses. During an inference stage, the one or more ML models may receive as input the first and/or second likelihood values and the third parameter from the respective first likelihood module 1102, second likelihood module 1104 and energy ratio module 1106. Based on how the one or more ML models have been trained, an output of the one or more ML models may be a detection classification (ultrasonic signal/attack or no attack).

As mentioned above, the apparatus 400, 800 may comprise a user device configured to perform the operations 701 - 705 described with reference to FIG. 7. Alternatively, the operations 701 - 705 may be performed by an apparatus other than the user device which comprises at least the microphone 206, 802 and the gyroscope 402, 812. For example, the operations 701 - 705 may be performed by a smartphone separate from a digital assistant 100 shown in FIG. 1 or hearing aid or the pair of earphones 200 shown in FIG. 2.

When the apparatus 400, 800 comprises left and right -hand devices, each comprising one or microphones and a gyroscope (such as the pair of earphones 200 shown in FIG. 2 assuming the right-hand earphone 204 comprises the same functionality as the left-hand earphone 202) it may be that each of the left and right -hand devices may work or be controlled independently. For example, if an ultrasonic attack is detected by both devices with equal characteristics, the same or similar mitigation operations described above may be used. On the other hand, if an ultrasonic attack comes from an angle which is one side more than the other, different mitigation operations may be used for the different devices. Detecting such situations may use known microphone beamforming methods or similar (e.g. correlation and/or delay calculations). If the left-hand device detects an ultrasonic attack, and not the right-hand device, then the mitigation operation may be used for that left-hand device and not necessarily (or with reduced amount) for the right-hand device.

Thus, the user device may comprise a left and right -hand entity each comprising one or more microphones, a loudspeaker and a gyroscope, wherein the first and second data is provided for each of the left and right-hand entities, wherein the detecting means is configured to detect that the signal received by a first one of said entities comprises an ultrasonic signal and the signal received by the other, second entity does not, or that the signal received by the first one of said entities comprises a greater amount of ultrasonic signal than the other, second entity. The controller 406, 810 may be configured to control the first entity differently from the second entity for mitigating the one or more events.

Example Apparatus

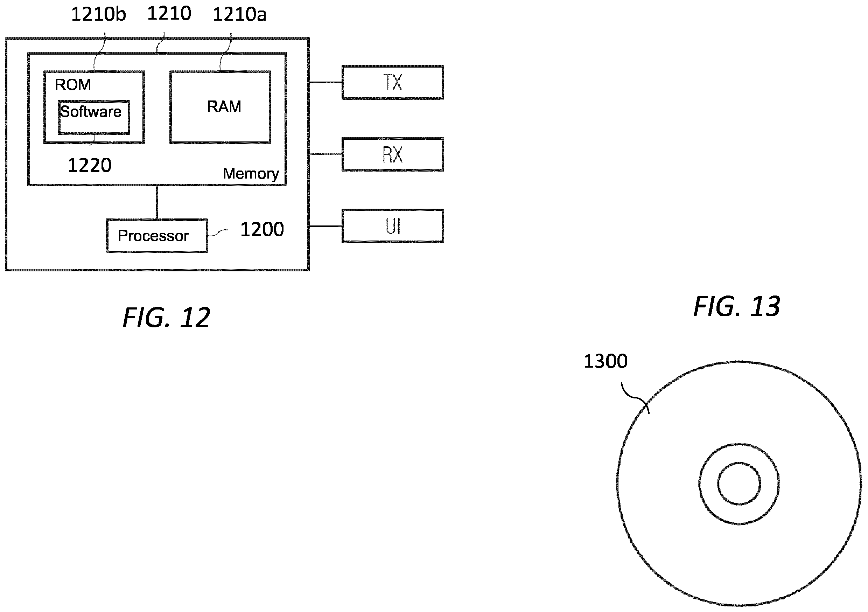

FIG. 12 shows, in overview, a schematic representation of an apparatus according to an embodiment, which may comprise the apparatus described herein. The apparatus may be configured to perform the operations described herein, for example operations described with reference to any preceding process. The apparatus comprises at least one processor 1200 and at least one memory 1210 directly or closely connected to the processor. The memory 1210 includes at least one random access memory (RAM) 1210a and at least one read-only memory (ROM) 1210b. Computer program code (software) 1220 is stored in the ROM 1210b. The apparatus may be connected to a transmitter (TX) and a receiver (RX). The apparatus may, optionally, be connected with a user interface (UI) for instructing the apparatus and/or for outputting data. The at least one processor 1200, with the at least one memory 1210 and the computer program code 1220 are arranged to cause the apparatus to at least perform at least the method according to any preceding process by executing the computer program code.

FIG. 13 shows a non-transitory media 1300 according to some embodiments. The non-transitory media 1300 is a computer readable storage medium. It may be e.g. a CD, a DVD, a USB stick, a blue ray disk, etc. The non-transitory media 1300 stores computer program code, causing an apparatus to perform the method of any preceding process by the apparatus executing the computer program code.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

**Claims**

1. An apparatus, the apparatus comprising:

   means for providing first data derived from a signal received by a microphone of a user device;
   means for providing second data representing mechanical oscillations within a gyroscope of the user device;
   means for detecting, based on the first data and the second data, that the signal received by the microphone comprises an ultrasonic signal;
   means for processing third data to generate fourth data representing an estimate of one or more audible sounds in the first data, wherein the third data is either the second data or is derived from the second data; and
   means for subtracting the fourth data from the first data to provide fifth data.

2. The apparatus of claim 1, wherein the processing means comprises a filter configured to receive the third data and to generate, based at least in part on filter coefficients of the filter, the fourth data.

3. The apparatus of claim 2, wherein the filter is an adaptive filter in which current values of the filter coefficients are modified based, at least in part, on the fifth data to provide updated filter coefficients.

4. The apparatus of claim 3, wherein the current values of the filter coefficients are modified based, at least in part, on multiplying the fifth data with the third data and adding to the current filter coefficients.

5. The apparatus of claim 4, wherein the current values of the filter coefficients are further modified based on an adaptation rate parameter.

6. The apparatus of any of claims 3 to 5, wherein

a first instance of the third data is associated with a first time window for use in generating a first set of said updated filter coefficients, one or more successive instances of the third data is or are associated with successive time windows, for use in generating one or more successive sets of said updated filter coefficients, wherein the apparatus is configured to iteratively modify the filter coefficients using the one or more successive instances of the third data until a predetermined condition is reached.

7. The apparatus of claim 6, wherein the predetermined condition is reached when a predetermined mean squared error value is below a predetermined threshold.

8. The apparatus of any preceding claim, wherein the second data represents two or more sets of gyroscope data representing mechanical oscillations for respective axes of the gyroscope and wherein the apparatus further comprises means for pre-processing the second data to provide the third data.

9. The apparatus of claim 8, wherein the pre-processing means is configured to select one of the two or more sets of gyroscope data to provide the third data based on said selected set representing the largest value of mechanical oscillations.

10. The apparatus of claim 8, wherein the pre-processing means is configured to provide the third data as a weighted sum of the two or more sets of gyroscope data.

11. The apparatus of any preceding claim, wherein the detecting means is configured to detect that the signal received by the microphone comprises an ultrasonic signal for a time period $T$ and wherein the subtracting means is configured to subtract the fourth data from the first data for only part of the time period $T$.

12. The apparatus of claim 11, wherein the subtracting means is configured to subtract the fourth data from the first data for a plurality of spaced-apart sub-periods within the time period T.

13. The apparatus of any preceding claim, wherein the first data is provided at the output of one or more non-linear components that process the signal received by the microphone.

14. The apparatus of any preceding claim, wherein the detecting means is configured to detect that the signal received by the microphone comprises an ultrasonic signal based, at least in part, on identifying non-zero values of the first data and the second or third data for one or more corresponding instances or periods.

15. The apparatus of any preceding claim, wherein the detecting means is configured to perform amplitude envelope correlation using respective waveforms represented by the first data and the second or third data for generating a first parameter indicative of a similarity between the respective waveforms, and wherein the detection is based, at least in part, on the first parameter.

16. The apparatus of any preceding claim, wherein the detecting means is configured to perform spectral analysis of frequency domain representations of respective waveforms represented by the first data and the second or third data for generating a second parameter indicative of similarity between the frequency domain representations, and wherein the detection is based, at least in part, on the second parameter.

17. The apparatus of claim 15 and claim 16, wherein the detection is based, at least in part, on the first and second parameters meeting respective predetermined conditions.

18. The apparatus of claim 15 or claim 16, wherein the detecting means comprises one or more machine-learned models trained using training data comprising predetermined sets of first and second parameters known to be generated responsive to ultrasonic signals being transmitted to the user device, wherein the detection is based on an output of the one or more machine-learned models.

19. A method, comprising:

   providing first data derived from a signal received by a microphone of a user device;
   providing second data representing mechanical oscillations within a gyroscope of the user device;
   detecting, based on the first data and the second data, that the signal received by the microphone comprises an ultrasonic signal;
   processing third data to generate fourth data representing an estimate of one or more audible sounds in the first data, wherein the third data is either the second data or is derived from the second data; and
   subtracting the fourth data from the first data to provide fifth data.

FIG. 1

FIG. 2

FIG. 3

*FIG. 4*

*FIG. 5*

EP 4 478 739 A1

*FIG. 6*

701 PROVIDING FIRST DATA DERIVED FROM A SIGNAL RECEIVED BY A MICROPHONE OF A USER DEVICE

702 PROVIDING SECOND DATA REPRESENTING MECHANICAL OSCILLATIONS WITHIN A GYROSCOPE OF THE USER DEVICE

703 DETECTING, BASED AT LEAST IN PART ON THE FIRST DATA AND THE SECOND DATA, THAT THE SIGNAL RECEIVED BY THE MICROPHONE COMPRISES AN ULTRASONIC SIGNAL

704 PROCESSING THIRD DATA TO GENERATE FOURTH DATA REPRESENTING AN ESTIMATE OF ONE OR MORE AUDIBLE SOUNDS IN THE FIRST DATA, WHEREIN THE THIRD DATA IS EITHER THE SECOND DATA OR IS DERIVED FROM THE SECOND DATA

705 SUBTRACTING THE FOURTH DATA FROM THE FIRST DATA TO PROVIDE FIFTH DATA

*FIG. 7*

*FIG. 8*

EP 4 478 739 A1

902

904

406, 810

CONTROLLER → ATTACK / NO ATTACK

**FIG. 9**

1002

1004

406, 810

1006

AMPLITUDE ENVELOPE CORRELATION

1010

1008

DECISION LOGIC → ATTACK / NO ATTACK

SPECTRAL ANALYSIS

**FIG. 10**

*FIG. 11*

EP 4 478 739 A1

FIG. 12

FIG. 13

EP 4 478 739 A1

Europäisches
Patentamt

European
Patent Office

Office européen
des brevets

# EUROPEAN SEARCH REPORT

**Application Number**

EP 24 18 0984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHI CONG ET AL: "Authentication of Voice Commands by Leveraging Vibrations in Wearables", SECURITY & PRIVACY, IEEE, IEEE SERVICE CENTER, LOS ALAMITOS, CA, US, vol. 19, no. 6, 25 May 2021 (2021-05-25), pages 83-92, XP011886134, ISSN: 1540-7993, DOI: 10.1109/MSEC.2021.3077205 [retrieved on 2021-10-29] * the whole document * | 1-19 | INV. H04R3/00 G06F21/55 G06F21/83 ADD. G10L21/0208 H04R1/08 |
| Y | CN 108 305 638 A (VIVO COMM TECHNOLOGY CO LTD) 20 July 2018 (2018-07-20) * the whole document * | 1-19 | |
| Y | HE YITAO HEYITAO@SJTU EDU CN ET AL: "Canceling Inaudible Voice Commands Against Voice Control Systems", MOBILE COMPUTING AND NETWORKING, ACM, 2 PENN PLAZA, SUITE 701NEW YORKNY10121-0701USA, 11 October 2019 (2019-10-11), pages 1-15, XP058475504, DOI: 10.1145/3300061.3345429 ISBN: 978-1-4503-6169-9 * the whole document * | 1-19 | |

-/--

|  | TECHNICAL FIELDS SEARCHED (IPC) |
|---|---|
|  | H04R G06F G10L |

The present search report has been drawn up for all claims

| Place of search | Date of completion of the search | Examiner |
|---|---|---|
| The Hague | 23 October 2024 | Carrière, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 18 0984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIN FENG ET AL: "Mobile Communication Among COTS IoT Devices via a Resonant Gyroscope With Ultrasound", IEEE /ACM TRANSACTIONS ON NETWORKING, vol. 31, no. 3, 1 June 2023 (2023-06-01), pages 1026-1041, XP093216908, US ISSN: 1063-6692, DOI: 10.1109/TNET.2022.3205151 * abstract * * page 1032 * | 1-19 | |
| A | YAZHOU TU ET AL: "Injected and Delivered: Fabricating Implicit Control over Actuation Systems by Spoofing Inertial Sensors", ARXIV.ORG, CORNELL UNIVERSITY LIBRARY, 201 OLIN LIBRARY CORNELL UNIVERSITY ITHACA, NY 14853, 20 June 2018 (2018-06-20), XP080892530, * pages 1, 3 * | 1-19 | |
| A | MATYUNIN NIKOLAY ET AL: "Zero-permission acoustic cross-device tracking", 2018 IEEE INTERNATIONAL SYMPOSIUM ON HARDWARE ORIENTED SECURITY AND TRUST (HOST), IEEE, 30 April 2018 (2018-04-30), pages 25-32, XP033357925, DOI: 10.1109/HST.2018.8383887 [retrieved on 2018-06-12] * pages 26, 31 * | 1-19 | TECHNICAL FIELDS SEARCHED (IPC) |

-/--

The present search report has been drawn up for all claims

| Place of search | Date of completion of the search | Examiner |
|---|---|---|
| The Hague | 23 October 2024 | Carrière, Olivier |

EPO FORM 1503 03.82 (P04C01)

page 2 of 3

Europäisches
Patentamt

European
Patent Office

Office européen
des brevets

**EUROPEAN SEARCH REPORT**

**Application Number**

EP 24 18 0984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KHAZAALEH SHADI ET AL: "Vulnerability of MEMS Gyroscopes to Targeted Acoustic Attacks", IEEE ACCESS, vol. 7, 5 July 2019 (2019-07-05), pages 89534-89543, XP011735452, DOI: 10.1109/ACCESS.2019.2927084 [retrieved on 2019-07-17] * abstract * * page 89538 * | 1-19 | |
| A | DENIS FOO KUNE ET AL: "Ghost Talk: Mitigating EMI Signal Injection Attacks against Analog Sensors", SECURITY AND PRIVACY (SP), 2013 IEEE SYMPOSIUM ON, IEEE, 19 May 2013 (2013-05-19), pages 145-159, XP032431321, DOI: 10.1109/SP.2013.20 ISBN: 978-1-4673-6166-8 * page 156 * | 3-7 | |
| | | | **TECHNICAL FIELDS SEARCHED (IPC)** |
| A | ZHANG GUOMING REALZGM@ZJU EDU CN ET AL: "DolphinAttack Inaudible Voice Commands", RESEARCH & DEVELOPMENT IN INFORMATION RETRIEVAL, ACM, 2 PENN PLAZA, SUITE 701NEW YORKNY10121-0701USA, 30 October 2017 (2017-10-30), pages 103-117, XP058633688, DOI: 10.1145/3133956.3134052 ISBN: 978-1-4503-5657-2 * the whole document * | 1-19 | |

The present search report has been drawn up for all claims

| Place of search | Date of completion of the search | Examiner |
|---|---|---|
| The Hague | 23 October 2024 | Carrière, Olivier |

EPO FORM 1503 03.82 (P04C01)

## ANNEX TO THE EUROPEAN SEARCH REPORT
## ON EUROPEAN PATENT APPLICATION NO.

EP 24 18 0984

This annex lists the patent family members relating to the patent documents cited in  the above-mentioned European search report.
The members are as contained in the European Patent Office EDP file on
The European Patent Office is in no way liable for these particulars which are merely given for the purpose of information.

23-10-2024

| Patent document cited in search report | Publication date | Patent family member(s) | Publication date |
|---|---|---|---|
| CN 108305638 A | 20-07-2018 | NONE | |

EPO FORM P0459